# EUROPEAN PATENT SPECIFICATION

(11) **EP 3 171 577 B1**
(45) Date of publication and mention of the grant of the patent: **09.01.2019**
(21) Application number: 16198984.3
(22) Date of filing: 15.11.2016
(51) Int. Cl.: H04M 1/04, B60R 11/02, B62J 11/00, F16M 11/10, B62J 99/00

(54) **SUPPORT FOR SMARTPHONE**
AUFNAHMEVORRICHTUNG FÜR SMARTPHONE
SUPPORT POUR SMARTPHONE

(30) Priority: 17.11.2015 IT UB20155678
(43) Date of publication of application: 24.05.2017
(73) Proprietor: Visionar S.r.l., 62010 Montefano (MC) (IT)
(72) Inventor: RANALLI, Antonio, 62010 MONTEFANO (MC) (IT); ANDREUCCI, Andrea, 60027 OSIMO (AN) (IT)
(74) Representative: Baldi, Claudio

(56) References cited:
- WO-A1-00/56042
- US-A1- 2002 009 195
- US-B1- 6 425 560

## Description

The present patent application for industrial invention relates to a support for smartphone.

In the following description the term "smartphone" is used to generally indicate a multifunctional electronic system capable of recording and playing audio and video materials, detecting, recording and displaying data about a vehicle and a driver.

Supports for smartphone and/or tablet and/or microcomputer are known, which are intended to be mounted on vehicles and in particular on motorcycles. Such supports are usually composed of an element intended to be secured to the handlebar or to a part of the vehicle chassis by means of a joint or a clamp capable of locking and supporting the smartphone or tablet in position.

Such supports are passive supports, i.e. they cannot be electronically moved and their main function is to secure a smartphone used as data display or navigator.

In the supports of the prior art, the adjustment of the position of the smartphone to visibility conditions, for example according to the driver's height or to brightness conditions, is entrusted to the manual regulation of the support by the driver, which is often made while the vehicle is moving and therefore in a dangerous situation.

Moreover, said supports do not add any multimedia functions to the use of the smartphone. In fact, smartphones are often used in vehicles as video and audio recording devices or as cameras or microcameras, storing the recordings in an internal memory. The supports for smartphones of the known type do not allow for adjusting the position of the support according to the recordings made.

Examples of known supports for smartphones are disclosed in WO 00/56042 A1 and US 6,425,560 B1.

The purpose of the present invention is to eliminate the drawbacks of the prior art by disclosing a support for smartphone that allows to use the smartphone also for making video recordings of the route, in addition to displaying data and maps.

The support for smarphone according to the invention comprises:
- a frame intended to support said smartphone,
- a tubular support element connected to said frame in such manner that said frame rotates around an axis of said tubular support element to adjust said smartphone in position; said tubular support element comprising engaging means, and
- a locking element that is movably mounted in said frame to engage with said engaging means of said tubular support element to lock said frame in position.

The frame comprises:
- a lower jaw intended to be disposed under a lower edge of the smartphone,
- an upper jaw intended to be disposed above an upper edge of the smartphone,
- an intermediate jaw disposed between the lower jaw and the upper jaw to hold a rear part of the smartphone,
- two columns disposed between the lower jaw and the intermediate jaw, said columns being perpendicular to the jaws and mutually parallel in such manner to be disposed behind the smartphone,
- two spacers disposed between the intermediate jaw and the upper jaw, and
- fixing means to fix the jaws to the columns.

The tubular support element is engaged in through radial holes of the columns, in such manner to be disposed behind the smartphone, parallel to the jaws and orthogonally to the columns.

Advantageously, the locking element can also be an adjustment element to continuously adjust the rotation of the frame with respect to the tubular support element and consequently the angle of inclination of the frame that supports the smartphone with respect to a vertical plane.

The support according to the invention complies with the following purposes:
- to rigidly secure the frame that supports the smartphone to a chassis of the motorcycle and in particular to the bar of the handlebar or to the handlebar of the motorcycle,
- to rotate the frame that supports the smartphone in two or more positions and to rigidly secure the frame in said positions,
- to move the frame that supports the smartphone by means of said locking element that can be actuated either manually or with an electric actuator,
- to guarantee the safe, reliable fixing of the smartphone to the support frame,
- to electronically control the angular position of the frame that supports the smartphone, that is the inclination of the smartphone with respect to a vertical plane.

Further characteristics of the invention will appear clearer from the following detailed description, referring to purely exemplary and therefore not limiting embodiments, wherein:
Fig. 1 is an exploded rear perspective view of all elements of a first embodiment of the support for smartphone according to the invention;
Fig. 1A is the same view as Fig. 1, except for the fact that it is a front perspective view;
Fig. 2 is a perspective view of a column of the support of Fig. 1,
Fig. 3 is a side view of the column of Fig. 2;
Fig. 4 is an enlarged view of some elements of Fig. 1;
Fig. 5 is an enlarged view of the locking element of Fig. 4;
Fig. 6 is partially axial sectional perspective view of the support of Fig. 1 in assembled condition;
Fig. 6A is an enlarged view of a detail of Fig. 6;
Fig. 7 is a partially sectional perspective view of a second embodiment of the support in assembled condition;
Fig. 7A is a perspective view of a variant of the support of Fig. 7;
Fig. 7B is a perspective view of a third embodiment of the support of Fig. 7;
Fig. 8 is a rear perspective view of a variant of the support of Fig. 1 in assembled condition;
Fig. 8A is a bottom view of a portion of the support of Fig. 8;
Fig. 8B is a perspective view of the front part of the support of Fig. 8 during the insertion of the smartphone;
Fig. 9 is a rear perspective view of an additional variant of the support of Fig. 1 in assembled condition;
Fig. 9A is a front view of the support of Fig. 9;
Fig. 9B is a rear view of the support of Fig. 9, wherein an expansion conduit has been removed;
Fig. 10 is an exploded rear perspective view of a fourth embodiment of the support;
Fig. 11 is a rear perspective view of the support of Fig. 10, wherein the locking element has been omitted;
Fig. 12 is a rear perspective view of the support of Fig. 11 secured to a bar of the handlebar, wherein the locking element has been inserted; and
Fig. 13 is a perspective view that shows the fixing of the support for smartphone according to the invention to a support of the motorcycle by means of an additional bar;
Fig. 14 is the same as Fig. 13, except for the fact that it shows a fifth embodiment of the support for smartphone according to the invention.

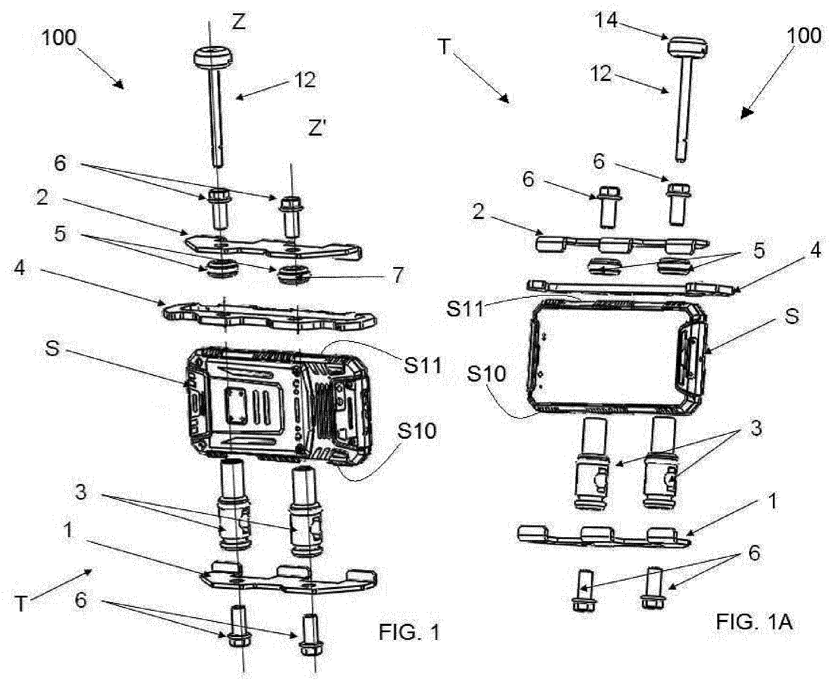

With reference to Figs. 1 and 1A, a first embodiment of the support according to the invention is described, it being generally indicated with reference numeral 100.

The support (100) comprises a frame (T) intended to support a smartphone (S) rotated by 90° with respect to the normal operating position, in such manner to have a lower edge (S10) and an upper edge (S11).

The frame (T) comprises a lower jaw (1) and an upper jaw (2), which are shaped as plates disposed in parallel position to tighten the lower edge (S10) and the upper edge (S11) of the smartphone (S). An intermediate jaw (4) is disposed behind the smartphone, between the lower jaw and the upper jaw, to hold a rear part of the smartphone.

Two columns (3) with vertical axes (Z, Z') are disposed in perpendicular position to the jaws (1, 2, 4) and in mutual parallel position to support the lower jaw (1) and the intermediate jaw (4). Two spacers (5) are disposed between the intermediate jaw (4) and the upper jaw (2). Fixing means (6) fix the jaws (1, 2, 4) to the columns (3), When the smartphone is disposed in the frame (T), the columns (3) are disposed behind the smartphone.

The spacers (5) can optionally comprise elastic elements (7) to recover the clearance between the spacers and the intermediate jaw and the upper jaw

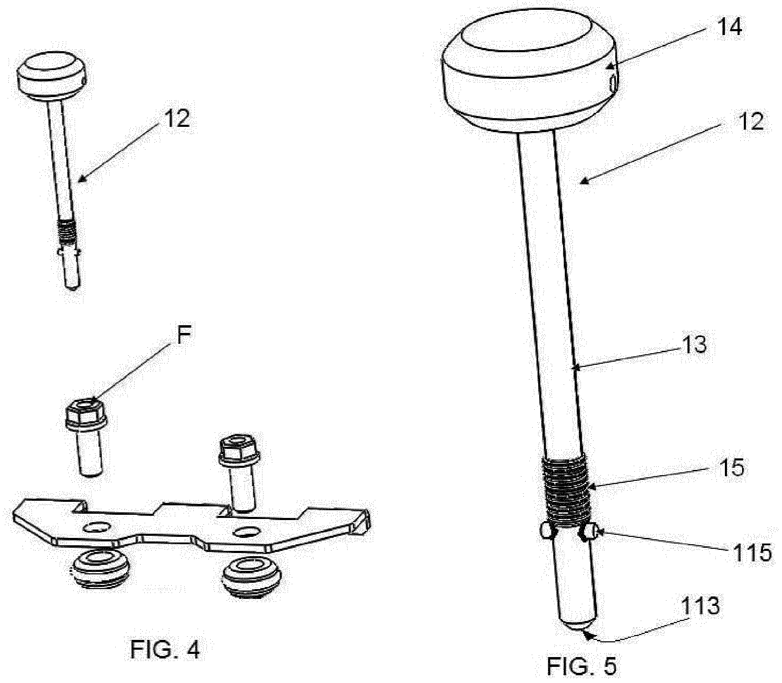

Advantageously, the fixing means (6) are screws or bolts with an through hole (F) (Fig. 4).

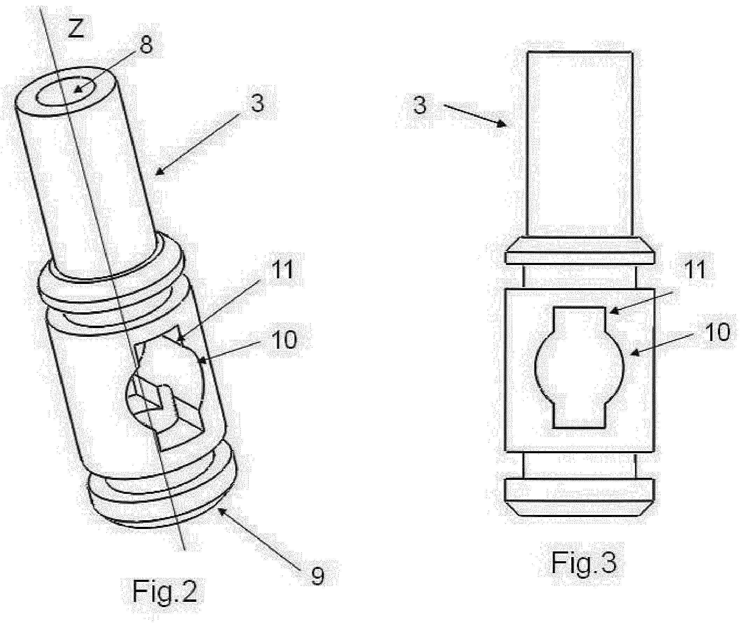

With reference to Fig. 2, each column (3) has a cylindrical body (30) with a through axial hole provided with an upper threaded end (8) and a lower threaded end (9) for screwing the bolts (6). In this way, the jaws (1, 2, 4) and the columns (3) form the frame (T) intended to support the smartphone (S) that is inserted in lateral position in the frame (T).

Moreover, each column (3) has a through hole (10) disposed in radial position for inserting a tubular support element (17) that is the element used for fixing the support (100), for example, to a part of a vehicle. The tubular support element (17) has an axis (Y) intended to be disposed horizontally.

An innovative characteristic is represented by the stack assembly of all jaws (1, 2, 4) of the frame on the columns (3) with axes (Z, Z') perpendicular to the axis (Y) of the tubular support element on which the frame (T) is revolvingly mounted.

With reference to Fig. 3, the through hole (10) of each column can be for example shaped as a slot (11) composed of a rectangle with a central circular portion. In any case the frame (T) must be capable of rotating around the axis (Y) of the tubular support element (17).

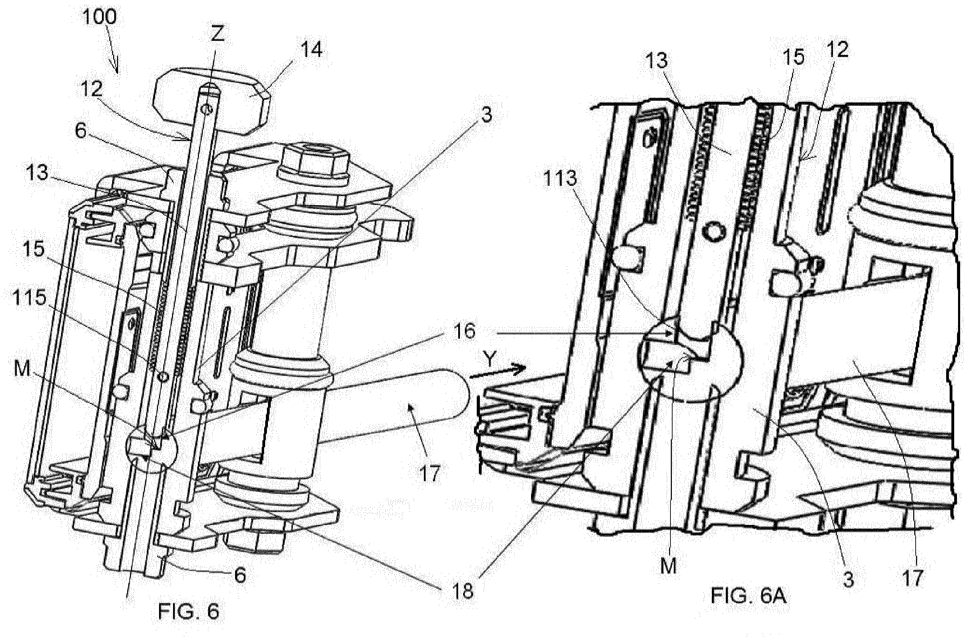

With reference to Figs. 4 and 5, a locking element (12) is inserted in the through axial hole (F) of a bolt of the fixing means (6). With reference to Figs. 6 and 6A, the locking element (12) is engaged with engaging means (M) of the tubular support element (17) to secure the frame (T) to the tubular support element.

The locking element (12) comprises a stem (13) with a lower end (113) and a knob (14) disposed at the upper end of the stem. A spring (15) is disposed around the stem (13) in proximity to the lower end (113) of the stem. Stopping means (115) protrude radially from the stem to lock the spring (15).

When the stem (13) is inserted in the through axial hole (F) of the bolt of the fixing means (6) and in the axial hole of the column (3), the spring (15) is compressed between the stopping means (115) of the stem and the bolt of the fixing means (6). In this way, the spring (15) pushes the lower end (113) of the stem against the engaging means (M) of the tubular support element (17) to lock the frame (T) with respect to the tubular support element.

Advantageously, the engaging means (M) of the tubular support element (17) comprise at least one radial cavity (16, 18) obtained in the tubular support element (17). For illustrative purposes, the tubular support element (17) comprises at least one first radial cavity (16) and a second radial cavity (18) to lock the frame (T) in multiple positions. By lifting the knob (14) in the direction of the axis (Z) of the locking element (12), the end (113) of the stem is disengaged from the first cavity (16) in such manner to release the tubular support element (17) and rotate the frame (T) with respect to the tubular support element (17) to adjust the position of the smartphone. Then, by releasing the knob (14), the stem is pushed by the spring (15) towards the tubular support element and the end (113) of the stem is engaged in the second cavity (18) with the tubular support element (17) to lock the frame with respect to the tubular support element (17) in this second position.

In the following description the parts that are identical or corresponding to the aforemetioned parts will be identified with the same reference numerals, omitting their detailed description.

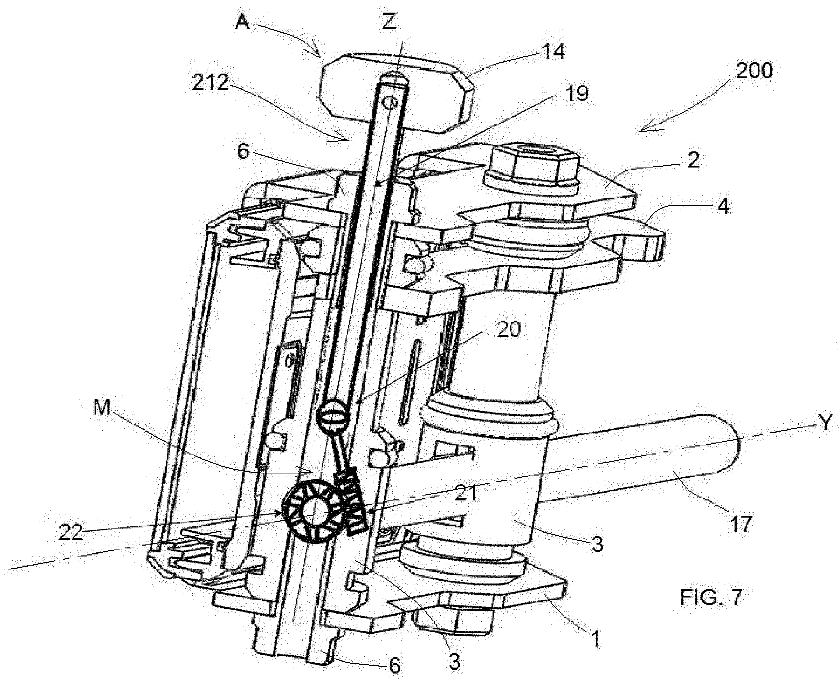

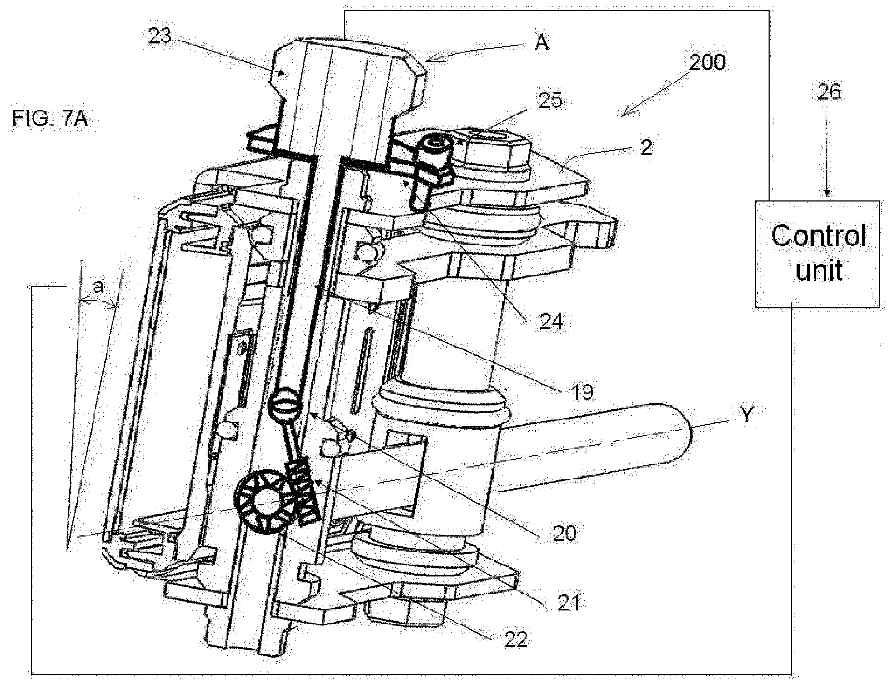

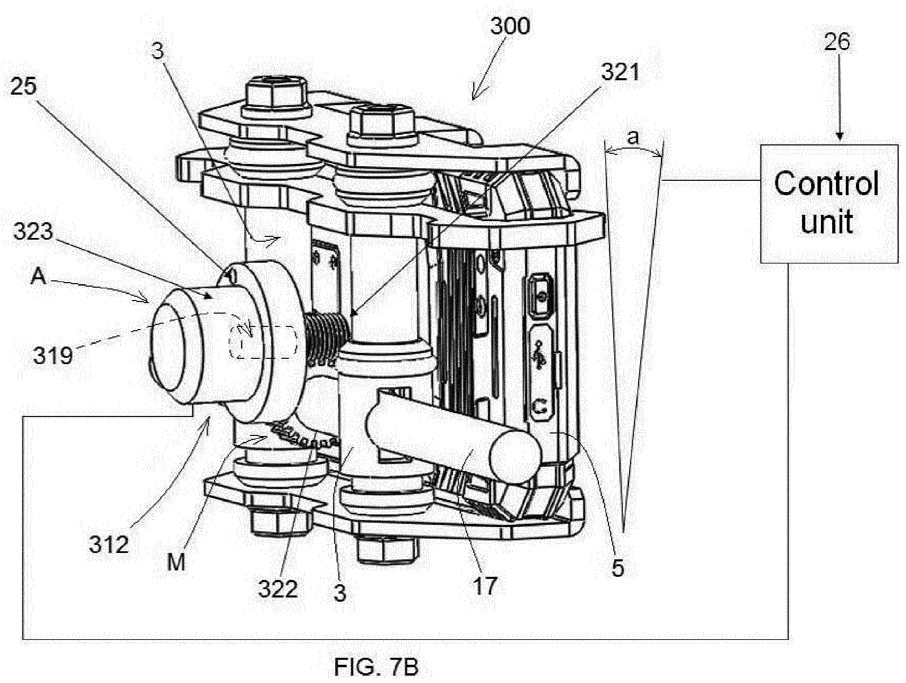

With reference to Fig. 7, a second embodiment of the support according to the invention is described, it being generally indicated with reference numeral 200. The support (200) comprises a locking element (212) provided with a knob (14) mounted at the upper end of a shaft (19). A joint (20) is mounted at the lower end of the shaft. A worm gear (21) is connected to the joint (20). In such a case the engaging means (M) of the tubular support element comprise a toothed wheel gear (22) that is inserted in the through radial hole (10) of one of the columns (3) and is disposed in the axial hole of the column.

In this way, the worm gear (21) of the locking element cooperates with the toothed wheel gear (22) of the tubular support element. Consequently, by rotating the knob (14) manually around the axis (Z) of the locking element, also the shaft (19) rotates, along with the worm screw, (21) which engages in the toothed wheel (22) of the tubular support element (17), which is fixed. So by rotating the knob (14) it is possible to continuously adjust the angular position of the frame (T) with respect to the tubular support element (17).

The gears (21, 22) are of pinion-worm screw type, wherein a backward motion between the two gears is prevented. Therefore, once the angular position of the frame is fixed with respect to the tubular support element, such an angular position remains fixed.

Fig. 7A shows a variant of the support (200) of the second embodiment, wherein the knob (14) of the locking means is replaced with an electric motor (23), preferably a stepping motor, having the shaft (19) of the locking element as driving shaft. The electric motor (23) has a casing fixed to the upper jaw (2), for example by means of a flange (24) and screw means (25). In such a case, the driving shaft of the electric motor (23) is the shaft (19) of the locking element.

The electric motor (23) is connected to a control unit (26) that is electrically connected to the smartphone to receive information about the position of the smartphone (i.e. the inclination (a) of the frame (T) with respect to a vertical axis). Such information about the position of the smartphone is detected by sensors installed in the smartphone.

According to the information about the position of the smartphone detected by the sensors installed in the smartphone, the control unit (26) controls the electric motor (23) in order to vary the angle of inclination (a) of the frame with respect to a vertical axis, for example to have the smartphone always perpendicular to the ground.

Fig. 7B shows a third embodiment of the support according to the invention, which is generally indicated with reference numeral 300. The support (300) comprises a locking element (312) comprising a shaft (319) and actuation means (A) connected to the shaft (319).

In this case the shaft (319) is disposed between the two columns (3) and is orthogonal to the two columns (3). The engaging means (M) of the tubular support element (17) are a toothed wheel gear (322) disposed between the two columns (3). The shaft (319) is connected to a worm gear (321) that is engaged in the toothed wheel (322).

The actuation means (A) can be an electric motor (323) fixed to one of the vertical columns (3) behind the smartphone (S). The casing of the electric motor (323) is fixed to the column (3), for example by means of a flange (24) and a screw (25).

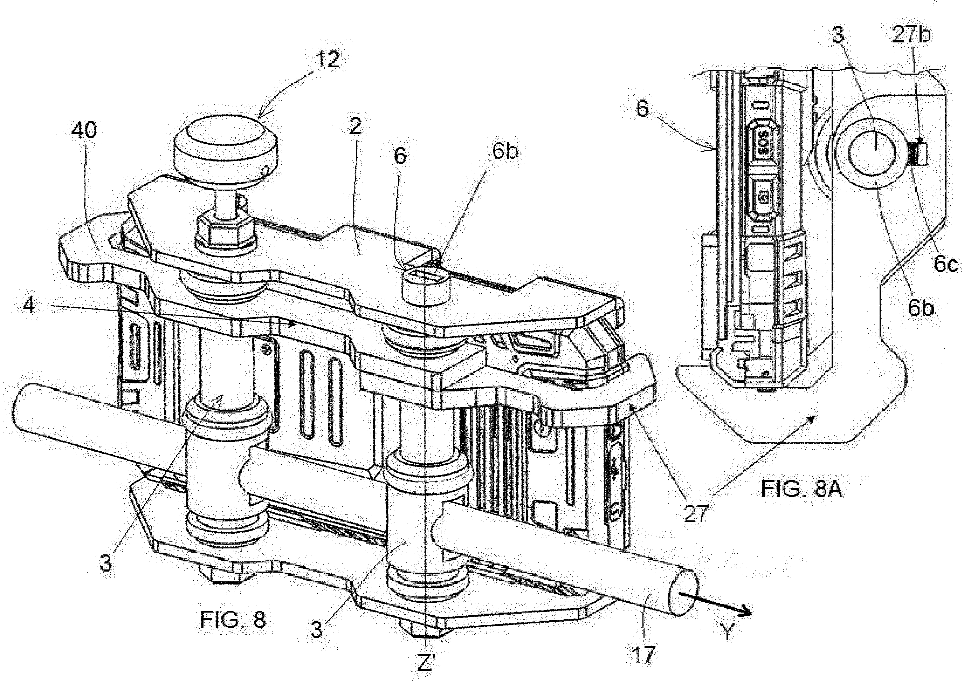

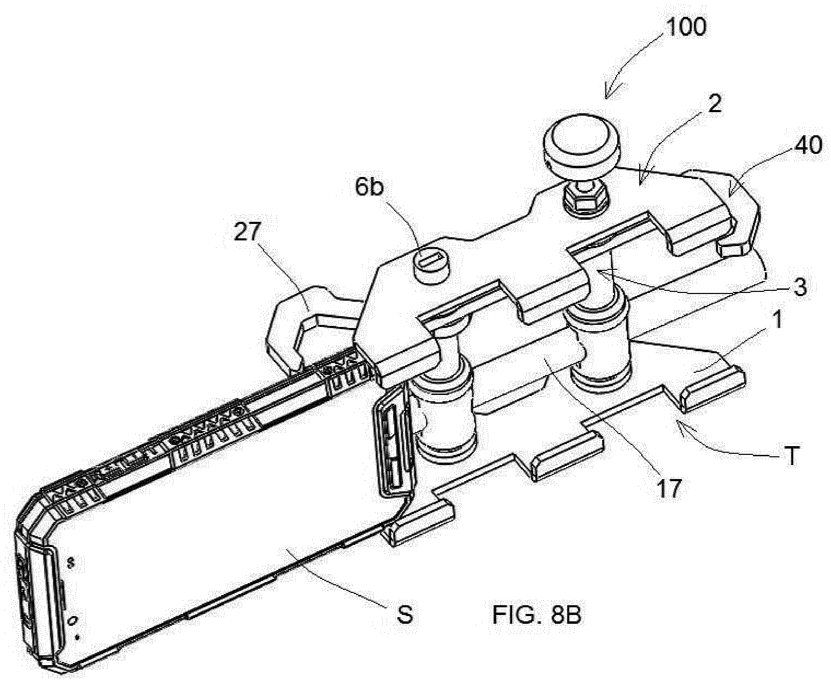

With reference to Fig. 8, according to a variant of the frame (T), the intermediate jaw (4) comprises a first portion (40) fixed to the two columns (3) and a second hook-shaped portion (27) hinged to a column (3) in such manner to rotate around the axis (Z') of the column (3). The second portion (27) of the intermediate jaw is held in position by a key mechanism (6b) integrated in the bolt of the fixing means (6). By actuating the key mechanism (6b), the second portion (27) of the intermediate jaw can be released, being free to rotate around the axis (Z') of the column, releasing the smartphone (S) in such manner to remove it along the direction of the axis (Y) of the tubular support element (17).

With reference to Fig. 8A, the key mechanism (6b) has a pin (6c) that is engaged in a housing (27b) obtained in the second portion (27) of the intermediate jaw.

Fig. 8B shows the removal of the smartphone (S), wherein the second portion (27) of the intermediate jaw has been disengaged to allow for laterally removing the smartphone.

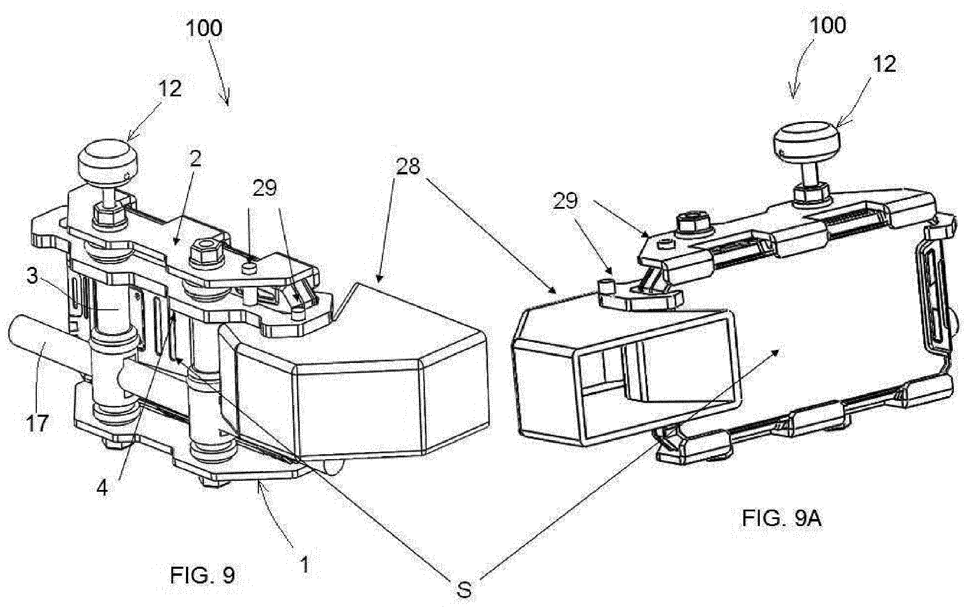

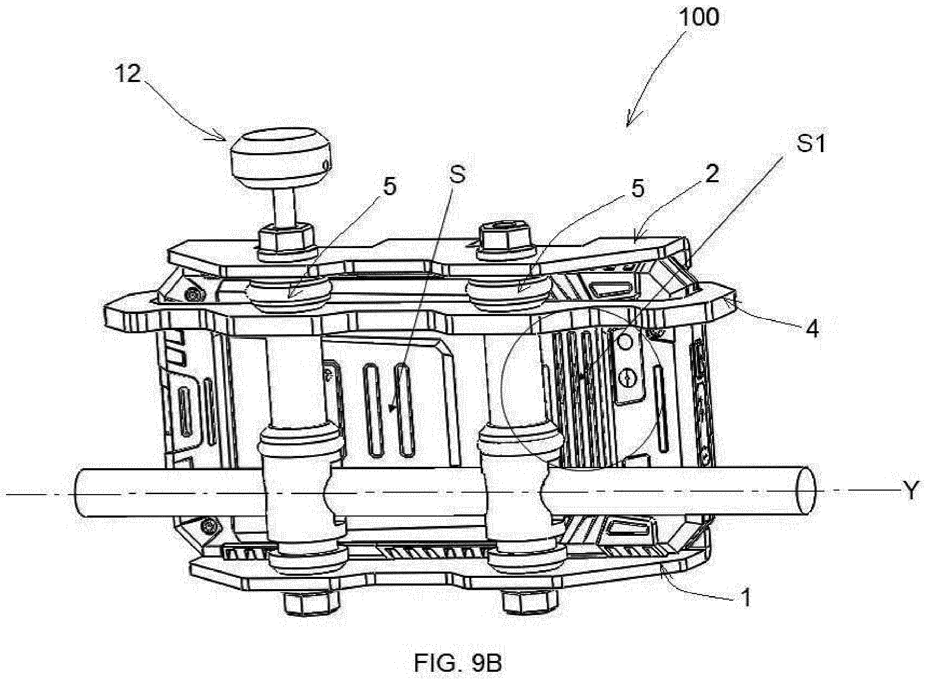

With reference to Figs. 9, 9A and 9B, an additional variant of the support (100) is described, which comprises an expansion conduit (28) fixed with pins (29) between the lower jaw (2) and the intermediate jaw (4). The expansion conduit (28) increases the sound sensation of the audio contents played by the smartphone (S) through the loudspeaker (S1) (Fig. 9B) of the smartphone using the resonance created in the expansion conduit (28).

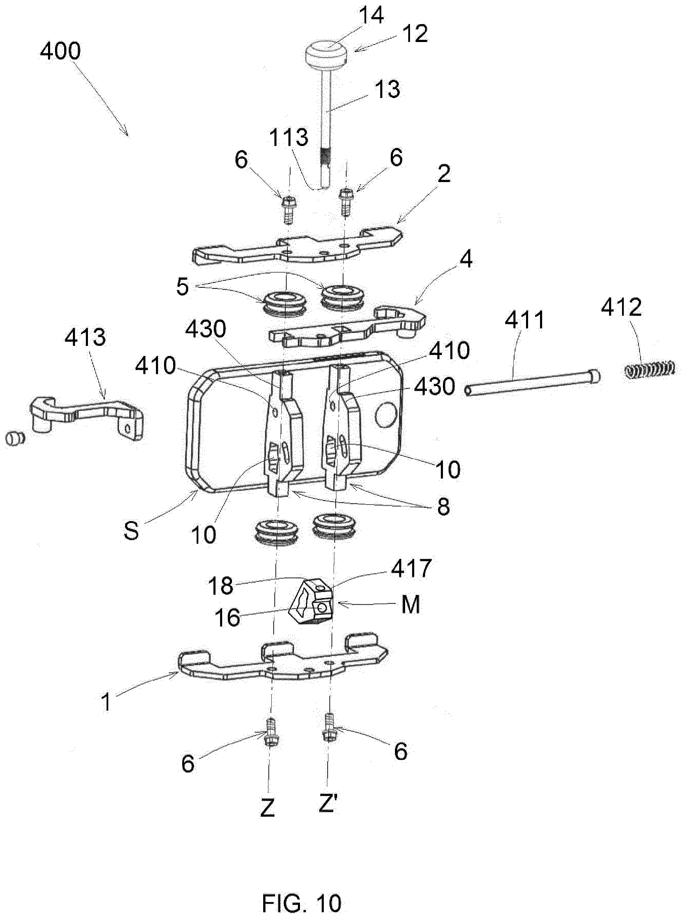

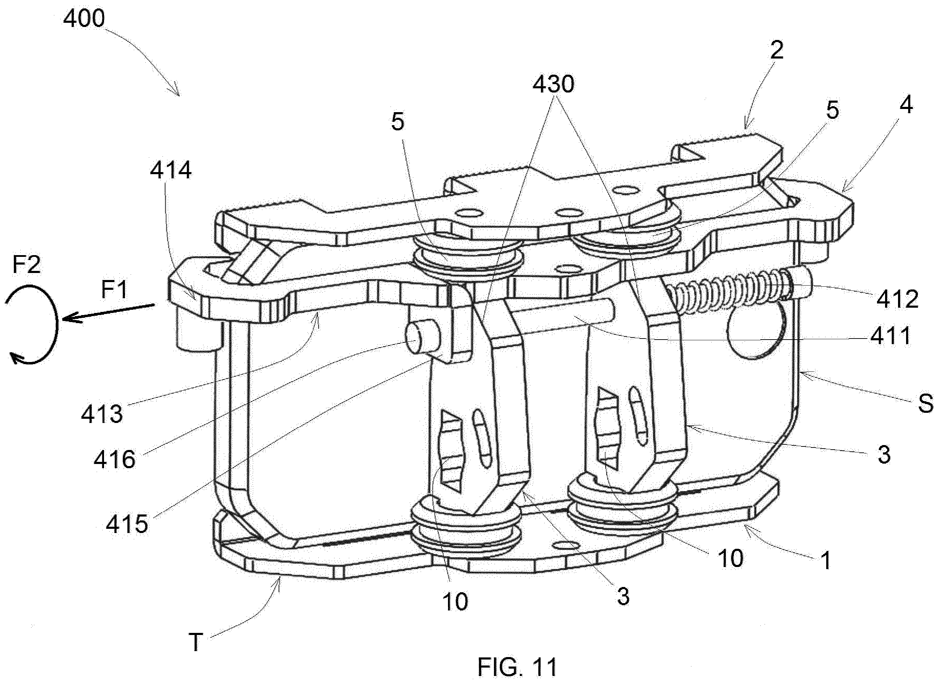

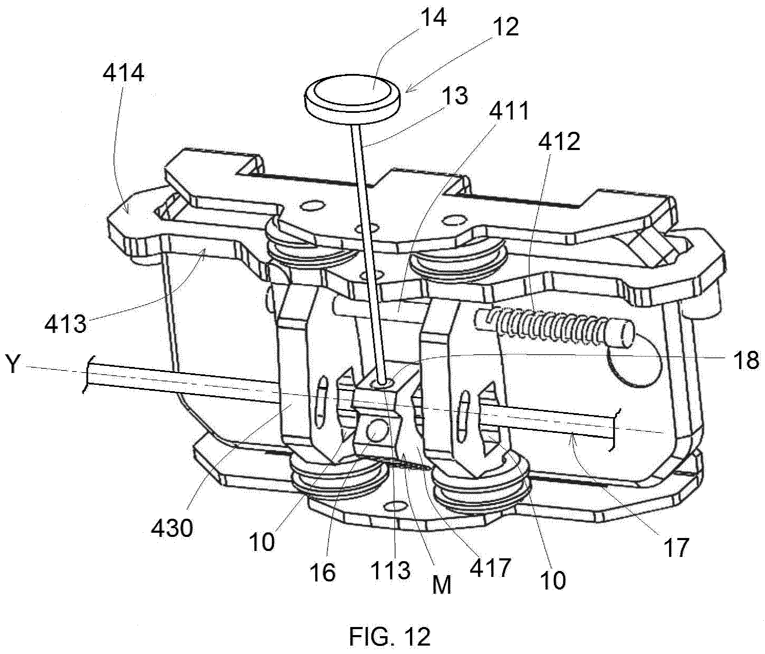

With reference to Figs. 10, 11 and 12, a fourth embodiment of the support for smartphone according to the invention is described, it being generally indicated with reference numeral 400.

The support (400) comprises two columns (3) with a plate-shaped body (430) provided with a through transverse hole (10) for inserting the tubular support element (17). Each column (3) has a second through transverse hole (410) for inserting a stem (411) held by a return spring (412) disposed outside of one of the columns (3).

A hook (413) comprises an arched fastening portion (414) intended to hook a lateral edge of the smartphone (S) and an ending flange (415) provided with a through hole (416). The ending flange (415) is stopped against one of the columns and the through hole (416) of the ending flange is aligned with the second hole (410) of the columns. The stem (411) is inserted in the holes (416, 410) of the ending flange (415) of the hook and of the columns (3). A first end of the stem is fixed to the ending flange (415) of the hook and a second end of the stem is fixed to the return spring (412) in such manner to hold the ending flange (415) stopped against one of the columns.

The spacers (5) disposed between the intermediate jaw (4) and the upper jaw (2) are suitably dimensioned with respect to the smartphone (S). In fact, the diameter of the spacers (5) increases if the thickness of the smartphone decreases, and the height of the spacers (5) increases if the width of the support (400) increases. Moreover, the length of the support can be easily adjusted by means of the rod (411) and the return spring (412).

To release the smartphone (S) from the frame (T), the user pulls the hook (413) along the direction of the arrow (F1) against the action of the return spring (412) and rotates the hook in the direction of the arrow (F2). When the user releases the hook (413) the return spring (412) returns the hook (413) bringing the ending flange in contact against one of the columns (3). Advantageously, each spacer (5) comprises a groove with an O-Ring in order to set off the thickness tolerance and generate suitable friction to rotate the spacers (5) when the smartphone (S) is disengaged from the support (400).

The engaging means (M) of the support (400) are not obtained directly in the tubular support element (17). The engaging means (M) comprise a block (417) that is fixed to the tubular support element (17). The block (417) comprises two cavities (16, 18) with inclined axes in order to receive the lower end (113) of the stem of the locking element (12).

The tubular support element (17) can directly be the bar of the handlebar.

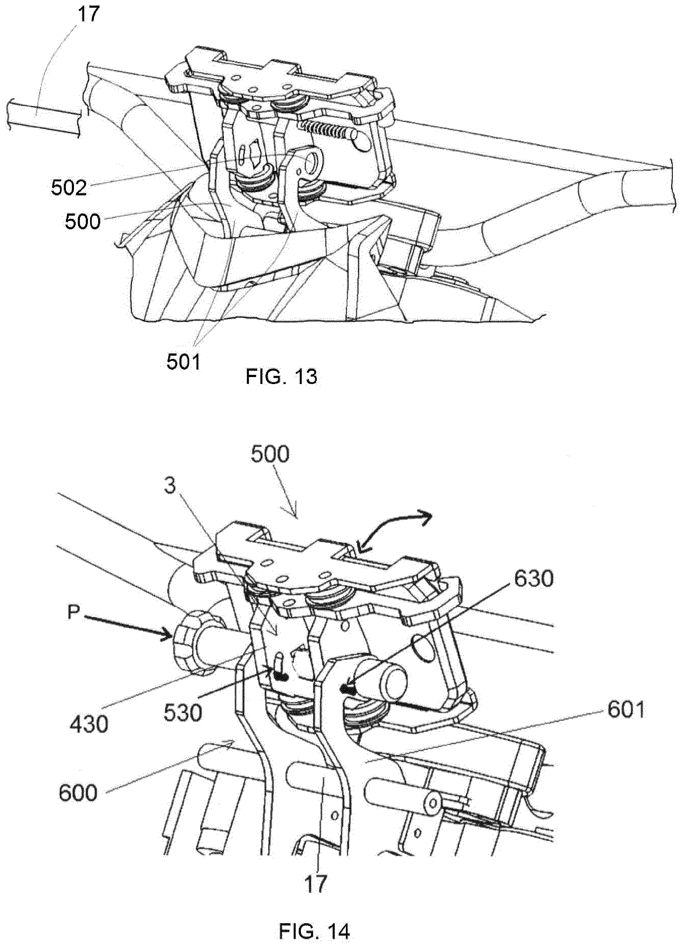

Alternatively, as shown in Fig. 13, the tubular support element (17) can be an additional bar fixed to a support (600) of the motorcycle. The support (600) comprises two flanges (601) with transverse holes (602) that are mutually aligned to insert the additional bar.

With reference to Fig. 14, a fifth embodiment of the support for smartphone according to the invention is described, it being generally indicated with reference numeral 500. The body (430) of each column (3) of the support (500) has a slot (530) and each flange (601) of the support (600) of the motorcycle comprises a pin (630) that protrudes from the flange to be slidingly engaged inside the slot (530) of one of the columns (3) of the support (500) according to the invention.

In such a way, the support for smartphone (500), which is revolvingly mounted on the tubular support element (17), can have different positions with respect to the support (600) of the motorcycle according to the sliding of the pins (630) inside the slots (530).

Moreover, the tubular support element (17) can be an additional bar provided with a threaded section intended to cooperate with an internal thread obtained in the transverse hole (602) of one of the flanges of the support (600) of the motorcycle. A knob (P) is fixed at one end of the additional bar to allow for screwing the additional bar.

## Claims

1. Support (100; 200; 300; 400) for smartphone (S) comprising:
- a frame (T) intended to support said smartphone (S),
- a tubular support element (17) connected to said frame (T) in such manner that said frame (T) rotates around an axis (Y) of said tubular support element (17) to adjust said smartphone in position; said tubular support element (17) comprising engaging means (M),
- a locking element (12; 212; 312) movably mounted in said frame (T) to engage with said engaging means (M) of said tubular support element (17) to lock said frame (T) in position
**characterized in that**
said frame (T) comprises:
- a lower jaw (1) intended to be disposed under a lower edge of the smartphone,
- an upper jaw (2) intended to be disposed above an upper edge of the smartphone,
- an intermediate jaw (4) disposed between the lower jaw and the upper jaw to hold a rear part of the smartphone,
- two columns (3) disposed between the lower jaw (1) and the intermediate jaw (4), said columns being perpendicular to the jaws and mutually parallel in such manner to be disposed behind the smartphone,
- two spacers (5) disposed between the intermediate jaw (4) (2) and the upper jaw (2),
- fixing means (6) to fix the jaws (1, 2, 4) to the columns (3),
wherein said tubular support element (17) is engaged in through radial holes (10) of the columns, in such manner to be disposed behind the smartphone, parallel to the jaws (1, 2, 4) and orthogonally to the columns (3).

2. The support (100; 200) of claim 1, wherein
each column (3) is provided with a through axial hole provided with threaded ends (8, 9),
said fixing means (6) are bolts that are screwed in said threaded ends (8, 9) of the through axial hole of the columns, said bolts being provided with a through axial hole (F),
the engaging means (M) of said tubular support element (17) are inserted in said through radial holes (10) of the columns in such manner to be disposed inside the through axial holes of the columns (3),
said locking element (12; 212) is inserted into the through axial hole (F) of a bolt used to lock a column, inside the through axial hole of the column (3) and is engaged with said engaging means (M) of the tubular support element (17) in such manner to stop the rotation of the frame (T) with respect to the tubular support element.

3. The support (100) of claim 2, wherein said engaging means (M) of the tubular support element (17) comprise at least one cavity (16, 18) that is radially disposed in said tubular support element (17) and
said locking element (12) comprises:
- a stem (13) with a lower end (113),
- a knob (14) disposed at an upper end of the stem, and
- a spring (15) disposed around the stem (13) in proximity to the lower end (113) of the stem and locked by stopping means (115) of the stem (13); said spring (15) axially pushing the stem (13) downwards so that said lower end (113) of the stem (13) is engaged inside said at least one radial cavity (16, 18) of the tubular support element (17) to stop the rotation of the frame (T) with respect to the tubular support element.

4. The support (100) of claim 3, wherein the tubular support element (17) comprises at least two radial cavities (16, 18) so that the user can lift the knob (14) of the locking element in axial direction to unlock the tubular support element (17), rotate the frame (T) with respect to the tubular support element and place the lower end (113) of the stem of the locking element in the following radial cavity of the tubular support element in such manner to stop the rotation of the frame with respect to the tubular support element.

5. The support (200; 300) of claim 1 or 2, wherein said engaging means (M) of the tubular support element (17) comprise a toothed wheel gear (22; 322) and said locking element (212; 312) comprises:
- a shaft (19; 319),
- actuation means (A) disposed at one end of the shaft,
- a worm gear (21; 321) connected to the shaft (19, 319) and engaging with said toothed wheel gear (22; 322) of the tubular support element (17) with pinion-worm coupling so that by rotating the shaft (19; 319) of the locking element the rotation of the frame (T) is continuously adjusted with respect to the tubular support element (17) and consequently the angular position (a) of the support frame (T) is adjusted with respect to a vertical plane.

6. The support (200) of claim 5, wherein the actuation means (A) are an electric motor (23; 323) with driving shaft corresponding to or connected to said shaft (19; 319) of the locking element.

7. The support (100; 200) of claim 5 or 6, wherein
said shaft (19) of the locking element is inserted in said hole (F) of the bolt of the fixing means (6) and in said axial hole of the column (3), and
said locking element (212) comprises a joint (20) that connects said shaft (19) to said worm gear (21; 321).

8. The support (300) of claim 5 or 6, wherein said shaft (319) of the locking element is disposed between said two columns (3) and is orthogonal to the columns.

9. The support (200; 300) of any one of claims 7 to 9, comprising a control unit (26) connected to the electric motor (23; 323) and to sensors disposed in the smartphone, said control unit (26) being configured to receive information about the position of the smartphone from said sensors of the smartphone and control said electric motor (23; 323) in such manner to control the rotation of the frame (T) with respect to said tubular support element (17) and consequently vary the inclination (a) of the frame (T) with respect to a vertical plane according to the information on the position of the smartphone received from said sensors of the smartphone.

10. The support (100; 200; 300) of any one of claims 2 to 10, wherein said intermediate jaw (4) comprises:
- a first portion (40) fixed to the two columns (3) and
- a second portion (27) hinged on an axis (Z') of one of the two columns (3); said second portion (27) of the intermediate jaw being held in position by a key mechanism (6b) integrated in said fixing means (6) and actuated by the user to disengage said second portion (27) of the intermediate jaw, allowing it to rotate around the axis (Z') of the column, thus releasing the smartphone in order to remove it from the frame (T).

11. The support (100; 200; 300) of any one of the preceding claims, also comprising an expansion conduit (28) fixed to said frame (T) in such manner to couple said expansion conduit (28) with a loudspeaker (S1) of the smartphone (S) to increase the sound sensation of audio contents played by the smartphone, using the resonance created in the expansion conduit (28).

12. The support (400) of claim 1, wherein said columns (3) have a plate-shaped body (430) with second transverse through holes (410) crossed by a stem (411) connected by a hook (413) intended to hook an edge of the smartphone and a return spring (412) disposed in such manner to return the hook (413) against one of the columns (3).

13. The support (400) of claim 1, wherein said engaging means (M) comprise a block (417) fixed to the tubular support element (17) and one plurality of cavities (16, 18) with different inclinations to receive an end (113) of a stem (13) of the locking element (12).

## Patentansprüche

1. Halterung (100; 200; 300; 400) für Smartphone (S), umfassend:
- einen Rahmen (T), der zum Halten des Smartphones (S) geeignet ist,
- ein rohrförmiges Halterungselement (17), das mit dem Rahmen (T) derart verbunden ist, dass der Rahmen (T) um eine Achse (Y) des rohrförmigen Halterungselements (17) zum Positionseinstellen des Smartphones drehbar ist; wobei das rohrförmige Halterungselement (17) Eingriffsmittel (M) umfasst,
- ein Verriegelungselement (12; 212; 312), das beweglich in dem Rahmen (T) eingebaut ist, um die Eingriffsmittel (M) des rohrförmigen Halterungselements (17) in Eingriff zu nehmen, um den Rahmen (T) in Position zu sperren,
**dadurch gekennzeichnet, dass**
der Rahmen (T) Folgendes umfasst:
- eine untere Backe (1), die dazu bestimmt ist, unter einer unteren Kante des Smartphones angeordnet zu werden,
- eine obere Backe (2), die dazu bestimmt ist, über einer oberen Kante des Smartphones angeordnet zu werden,
- eine Zwischenbacke (4), die zwischen der unteren Backe und der oberen Backe angeordnet ist, um einen hinteren Teil des Smartphones zu halten,
- zwei Säulen (3), die zwischen der unteren Backe (1) und der Zwischenbacke (4) angeordnet sind, wobei die Säulen senkrecht zu den Backen und zueinander parallel sind, um hinter dem Smartphone angeordnet zu sein,
- zwei Distanzstücke (5), die zwischen der Zwischenbacke (4) (2) und der oberen Backe (2) angeordnet sind,
- Befestigungsmittel (6) zum Befestigen der Backen (1, 2, 4) an den Säulen (3),
wobei das rohrförmige Halterungselement (17) in radialen Bohrungen (10) der Säulen in Eingriff steht, um hinter dem Smartphone, parallel zu den Backen (1, 2, 4) und rechtwinklig zu den Säulen (3) angeordnet zu sein.

2. Halterung (100; 200) nach Anspruch 1, wobei
jede Säule (3) mit einer axialen Durchgangsbohrung mit Gewindeenden (8, 9) versehen ist,
die Befestigungsmittel (6) Bolzen sind, die in die Gewindeenden (8, 9) der axialen Durchgangsbohrung der Säulen eingeschraubt sind, wobei die Bolzen mit einer axialen Durchgangsbohrung (F) versehen sind,
die Eingriffsmittel (M) des rohrförmigen Halterungselements (17) in die radialen Durchgangsbohrungen (10) der Säulen eingesetzt sind, um in den axialen Durchgangsbohrungen der Säulen (3) angeordnet zu sein,
das Befestigungselement (12; 212) in die axiale Durchgangsbohrung (F) eines Bolzens (3) eingesteckt ist, der zur Verriegelung einer Säule im Inneren der axialen Durchgangsbohrung der Säule dient, und die Eingriffsmittel (M) des rohrförmigen Halterungselements (17) in Eingriff nimmt, um die Drehung des Rahmens (T) in Bezug auf das rohrförmige Halterungselement zu sperren.

3. Halterung (100) nach Anspruch 2, wobei die Eingriffsmittel (M) des rohrförmigen Halterungselements (17) mindestens eine Vertiefung (16, 18) umfassen, die radial in dem rohrförmigen Halterungselement (17) angeordnet ist, und
das Verriegelungselement (12) Folgendes umfasst:
- einen Stab (13) mit einem unteren Endabschnitt (113),
- einen Knauf (14), der am oberen Endabschnitt des Stabes angeordnet ist und
- eine Feder (15), die um den Stab (13), nahe dem unteren Endabschnitt (113) des Stabes angeordnet und durch Anschlagmittel (115) des Stabes (13) gesperrt ist; wobei die Feder (15) den Stab (13) axial derart nach unten drückt, dass der untere Endabschnitt (113) des Stabes (13) die mindestens eine radiale Vertiefung (16, 18) des rohrförmigen Halterungselements (17) in Eingriff nimmt, um die Drehung des Rahmens (T) in Bezug auf das rohrförmige Halterungselement zu sperren.

4. Halterung (100) nach Anspruch 3, wobei das rohrförmige Halterungselement (17) mindestens zwei radiale Vertiefungen (16, 18) umfasst, derart, dass der Benutzer den Knauf (14) des Verriegelungselements in axiale Richtung anheben kann, um das rohrförmige Halterungselement (17) zu entsperren, den Rahmen (T) in Bezug auf das rohrförmige Halterungselement zu drehen und den unteren Endabschnitt (113) des Stabes des Verriegelungselements in die nächste radiale Vertiefung des rohrförmigen Halterungselements zu positionieren, um die Drehung des Rahmens in Bezug auf das rohrförmige Halterungselement zu sperren.

5. Halterung (200; 300) nach Anspruch 1 oder 2, wobei die Eingriffsmittel (M) des rohrförmigen Halterungselements (17) ein Zahnradgetriebe (22; 322) umfassen und das Verriegelungselement (212; 312) Folgendes umfasst:
- eine Welle (19; 319),
- Betätigungsmittel (A), die an einem Endabschnitt der Welle angeordnet sind,
- ein Schneckengeriebe (21; 321), das mit der Welle (19, 319) verbunden ist und in das Zahnradgetriebe (22; 322) des rohrförmigen Halterungselements (17) mit einer Ritzel-Schneckenkupplung eingreift, derart, dass durch Drehen der Welle (19; 319) des Verriegelungselements die Drehung des Rahmens (T) in Bezug auf das rohrförmige Halterungselement (17) und folglich die Winkelstellung (a) des Halterungsrahmens (T) in Bezug auf eine vertikale Ebene kontinuierlich angepasst wird.

6. Halterung (200) nach Anspruch 5, wobei die Betätigungsmittel (A) ein Elektromotor (23; 323) mit einer der Welle (19; 319) des Verriegelungselements entsprechenden oder verbundenen Antriebswelle sind.

7. Halterung (100; 200) nach Anspruch 5 oder 6, wobei
die Welle (19) des Verriegelungselements in die Bohrung (F) des Bolzens der Befestigungsmittel (6) und in die axiale Bohrung der Säule (3) eingesteckt ist und
das Verriegelungselement (212) ein Verbindungsstück (20) umfasst, das die Welle (19) mit dem Schneckengetriebe (21; 321) verbindet.

8. Halterung (300) nach Anspruch 5 oder 6, wobei die Welle (319) des Verriegelungselements zwischen den beiden Säulen (3) und rechtwinklig zu den Säulen angeordnet ist.

9. Halterung (200; 300) nach einem der Ansprüche 6 bis 9, umfassend eine Steuereinheit (26), die mit dem Elektromotor (23; 323) und mit in dem Smartphone angeordneten Sensoren verbunden ist, wobei die Steuereinheit (26) konfiguriert ist, um Informationen über die Position des Smartphones von den Sensoren des Smartphones zu empfangen und den Elektromotor (23; 323) derart zu steuern, dass die Drehung des Rahmens (T) in Bezug auf das rohrförmige Halterungselement (17) gesteuert und folglich die Neigung (a) des Rahmens (T) in Bezug auf eine vertikale Ebene gemäß den von den Sensoren des Smartphones empfangenen Informationen über die Position des Smartphones variiert wird.

10. Halterung (100; 200; 300) nach einem der Ansprüche von 2 bis 10, wobei die Zwischenbacke (4) Folgendes umfasst:
- einen ersten, an den beiden Säulen (3) befestigten Abschnitt (40) und
- einen zweiten, an einer Achse (Z') einer der beiden Säulen (3) angeschlagenen Abschnitt (27); wobei der zweite Abschnitt (27) der Zwischenbacke durch einen Schlüsselmechanismus (6b) in Position gehalten wird, der in den Befestigungsmitteln (6) eingebaut und vom Benutzer betätigt wird, um den zweiten Abschnitt (27) der Zwischenbacke außer Eingriff zu bringen, so dass sie frei ist, sich um die Achse (Z') der Säule zu drehen und das Smartphone folglich freizugeben, damit es aus dem Rahmen (T) herausnehmbar ist.

11. Halterung (100; 200; 300) nach einem der vorstehenden Ansprüche, umfassend ferner eine Erweiterungsleitung (28), die an dem Rahmen (T) derart befestigt ist, dass die Erweiterungsleitung (28) mit einem Lautsprecher (S1) des Smartphones (S) verbindbar ist, um das Schallempfinden von vom Smartphone wiedergegebenen Audioinhalten durch Nutzung der Resonanz zu verstärken, die in der Erweiterungsleitung (28) erzeugt wird.

12. Halterung (400) nach Anspruch 1, wobei die Säulen (3) einen plattenförmigen Körper (430) mit zweiten, quer angeordneten Durchgangsbohrungen (410) aufweisen, durch die ein Stab (411) durchgeführt ist, der mit einem Haken (413) verbunden ist, der dazu dient, an eine Kante des Smartphones und an eine Rückholfeder (412) anzukuppeln, die angeordnet ist, um den gegen eine der Säulen in Anschlag gehenden Haken (413) zurückzuholen.

13. Halterung (400) nach Anspruch 1, wobei die Eingriffsmittel (M) einen an dem rohrförmigen Halterungselement (17) befestigten Block (417) und eine Mehrzahl von Vertiefungen (16, 18) mit unterschiedlichen Neigungen umfassen, um einen Endabschnitt (113) eines Stabes (13) des Verriegelungselements (12) aufzunehmen.

## Revendications

1. Support (100; 200; 300; 400) pour smartphone (S) comprenant :
- un cadre (T) apte à soutenir dit smartphone (S),
- un élément tubulaire de support (17) connecté au dit cadre (T) de manière à ce que ledit cadre (T) puisse pivoter autour d'un axe (Y) de dit élément tubulaire de support (17) pour régler en place ledit smartphone ; dit élément tubulaire de support (17) comprenant des moyens d'engagement (M),
- un élément de blocage (12; 212; 312) monté mobile dans ledit cadre (T) pour s'engager avec les dits moyens d'engagement (M) du dit élément tubulaire de support (17) pour bloquer en place ledit cadre (T).
**caractérisé en ce que**
ledit cadre (T) comprend :
- une mâchoire inférieure (1) destinée à être disposée sous un bord inférieur du smartphone,
- une mâchoire supérieure (2) destinée à être disposée au-dessus d'un bord supérieur du smartphone,
- une mâchoire intermédiaire (4) disposée entre la mâchoire inférieure et la mâchoire supérieure pour retenir une partie arrière du smartphone,
- deux colonnettes (3) disposées entre la mâchoire inférieure (1) et la mâchoire intermédiaire (4), lesdites colonnettes étant perpendiculaires aux mâchoires et parallèles entre elles, de manière à se disposer derrière le smartphone,
- deux entretoises (5) disposées entre la mâchoire intermédiaire (4) (2) et la mâchoire supérieure (2),
- des moyens de fixation (6) pour fixer les mâchoires (1, 2, 4) aux colonnettes (3),
où ledit élément tubulaire de support (17) s'engage dans des orifices passants radiaux (10) des colonnettes, de manière à se disposer derrière le smartphone, parallèlement aux mâchoires (1, 2, 4) et orthogonalement aux colonnettes (3).

2. Support (100; 200) selon la revendication 1, où
chaque colonnette (3) est dotée d'un orifice axial passant ayant des extrémités filetées (8, 9),
lesdits moyens de fixation (6) sont des boulons qui se vissent dans lesdites extrémités filetées (8, 9) de l'orifice passant axial des colonnettes, lesdits boulons étant dotés d'un orifice passant axial (F),
les moyens d'engagement (M) de dit élément tubulaire de support (17) sont insérés dans lesdits orifices passants radiaux (10) des colonnettes de manière à se disposer dans les orifices passants axiaux des colonnettes (3),
ledit élément de blocage (12; 212) est enfilé dans l'orifice passant axial (F) d'un boulon qui bloque une colonnette, dans l'orifice passant axial de la colonnette (3) et s'engage avec lesdits moyens d'engagement (M) de l'élément tubulaire de support (17) de manière à bloquer la rotation du cadre (T) par rapport à l'élément tubulaire de support.

3. Support (100) selon la revendication 2, où lesdits moyens d'engagement (M) de l'élément tubulaire de support (17) comprennent au moins une cavité (16, 18) disposée radialement dans ledit élément tubulaire de support (17) et
ledit élément de blocage (12) comprend:
- une tige (13) ayant une extrémité inférieure (113),
- un pommeau (14) disposé à une extrémité supérieure de la tige, et
- un ressort (15) disposé autour de la tige (13) à proximité de l'extrémité inférieure (113) de la tige et bloqué par des moyens d'arrêt (115) de la tige (13) ; ledit ressort (15) poussant axialement la tige (13) vers le bas de manière que ladite extrémité inférieure (113) de la tige (13) s'engage dans au moins une cavité radiale (16, 18) de l'élément tubulaire de support (17), pour bloquer la rotation du cadre (T) par rapport à l'élément tubulaire de support.

4. Support (100) selon la revendication 3, où l'élément tubulaire de support (17) comprend au moins deux cavités radiales (16, 18), de façon à ce que l'utilisateur puisse soulever le pommeau (14) de l'élément de blocage en direction axiale pour débloquer l'élément tubulaire de support (17) et faire tourner le cadre (T) par rapport à l'élément tubulaire de support et positionner l'extrémité inférieure (113) de la tige de l'élément de blocage dans la cavité radiale suivante de l'élément tubulaire de support, afin de bloquer la rotation du cadre par rapport à l'élément tubulaire de support.

5. Support (200; 300) selon la revendication 1 ou 2, où lesdits moyens d'engagement (M) de l'élément tubulaire de support (17) comprennent un engrenage à roue dentée (22; 322) et ledit élément de blocage (212; 312) comprend :
- un arbre (19; 319),
- des moyens d'actionnement (A) disposés à une extrémité de l'arbre,
- un engrenage à vis (21; 321) connecté à l'arbre (19, 319) et qui s'embraie avec ledit engrenage à roue dentée (22; 322) de l'élément tubulaire de support (17), avec un accouplement du type pignon-vis sans fin, de façon qu'en faisant tourner l'arbre (19; 319) de l'élément de blocage on peut régler, en continu, la rotation du cadre (T) par rapport à l'élément tubulaire de support (17) et donc la position angulaire (a) du cadre de support (T) par rapport à un plan vertical.

6. Support (200; 300) selon la revendication 5, où lesdits moyens d'actionnement (A) sont un moteur électrique (23; 323) ayant un arbre d'entraînement correspondant à, ou branché au, dit arbre (19; 319) de l'élément de blocage.

7. Support (100; 200) selon la revendication 5 ou 6, où
ledit arbre (19) de l'élément de blocage est enfilé dans ledit orifice (F) du boulon des moyens de fixation (6) et dans ledit orifice axial de la colonnette (3), et
ledit élément de blocage (212) comprend un joint (20) qui connecte ledit arbre (19) au dit engrenage à vis sans fin (21 ; 321).

8. Support (300) selon la revendication 5 ou 6, où ledit arbre (319) de l'élément de blocage est disposé entre lesdites deux colonnettes (3) et il est orthogonal aux colonnettes.

9. Support (200; 300) selon l'une quelconque des revendications de 7 à 9, comprenant une unité de commande (26) branchée au moteur électrique (23; 323) et aux capteurs disposés dans le smartphone, ladite unité de commande (26) étant configurée pour recevoir des informations relatives à la position du smartphone en provenance des dits capteurs du smartphone et commander ledit moteur électrique (23; 323) de façon à commander la rotation du cadre (T) par rapport au dit élément tubulaire de support (17) et donc varier l'inclinaison (a) du cadre (T) par rapport à un plan vertical, conformément aux dites informations relatives à la position du smartphone reçues depuis lesdits capteurs du smartphone.

10. Support (100; 200; 300) selon l'une quelconque des revendications de 2 à 10, où ladite mâchoire intermédiaire (4) comprend :
- un premier segment (40) fixé aux deux colonnettes (3) et
- un second segment (27) pivoté sur un axe (Z') de l'une des deux colonnettes (3) ; ledit second segment (27) de la mâchoire intermédiaire étant maintenu en place par un mécanisme à clé (6b) intégré dans lesdits moyens de fixation (6) et activable par l'utilisateur pour désengager ledit second segment (27) de la mâchoire intermédiaire pour qu'il puisse librement tourner autour de l'axe (Z') de la colonnette, en libérant le smartphone de façon à pouvoir le détacher du cadre (T).

11. Support (100; 200; 300) selon l'une quelconque des revendications précédentes, comprenant également un conduit à expansion (28) fixé au dit cadre (T) de sorte que ledit conduit à expansion (28) puisse se coupler à un haut-parleur (S1) du smartphone (S) pour augmenter la sensation sonore de contenus audio reproduits par le smartphone, en exploitant les résonances qui se créent dans le conduit à expansion (28).

12. Support (400) selon la revendication 1, où lesdites colonnettes (3) ont un corps (430) en forme de plaque avec des seconds orifices transversaux passants (410) traversés par une tige (411) reliée à un crochet (413) apte à accrocher un bord du smartphone et à un ressort de rappel (412) disposé de manière à ramener le crochet (413) en butée contre l'une des colonnettes (3).

13. Support (400) selon la revendication 1, où lesdits moyens d'engagement (M) comprennent un bloc (417) fixé à l'élément tubulaire de support (17) et une pluralité de cavités (16, 18) ayant des inclinaisons différentes pour accueillir une extrémité (113) d'une tige (13) de l'élément de blocage (12).
